# DEMANDE DE BREVET EUROPEEN

(11) **EP 3 489 050 A1**
(43) Date de publication de la demande: **29.05.2019**
(21) Numéro de dépôt: 18205567.3
(22) Date de dépôt: 12.11.2018
(51) Int. Cl.: B60G 21/067, B60G 21/073, B60G 21/10, B62K 5/10

(54) **DISPOSITIF DE CORRECTION DE ROULIS POUR UN VÉHICULE AUTOMOBILE INCLINABLE À DISPOSITIF DE SUSPENSION HYDROPNEUMATIQUE**

(30) Priorité: 24.11.2017 FR 1761159
(71) Demandeur: PSA Automobiles SA, 78300 Poissy (FR)
(72) Inventeur: HERNETTE, Vincent, 75014 PARIS (FR); GERARD, Fabien, 91400 ORSAY (FR); KANOUNNIKOFF, Thomas, 92500 RUEIL MALMAISON (FR)

(57) **Abrégé**

Un dispositif de correction hydraulique (DC) équipe un véhicule automobile inclinable (V) ayant une structure (SA) d'accueil de passager(s) et un train (T1) comportant des roues droite (RD1) et gauche (RG1) couplées à des amortisseurs droit (AD1) et gauche (AG1) d'un dispositif de suspension (DS1) hydropneumatique. Ce dispositif (DC) comprend :
- un pont de Wheatstone hydraulique (PW) ayant des parties droite (EA1, EE1) et gauche (EA2, EE2) dédiées aux contrôles d'échange de fluide avec les amortisseurs droit (AD1) et gauche (AG1), et une partie centrale comprenant une pompe (PF), et
- des moyens de contrôle (MCT) imposant une configuration au pont (PW) adaptée au redressement de la structure (SA), et un blocage du roulis du train (T1) avec les amortisseurs droit (AD1) et gauche (AG1) non opérationnels ou opérationnels selon que la vitesse du véhicule (V) est inférieure ou supérieure à un seuil de vitesse.

## Description

L'invention concerne les véhicules automobiles qui sont inclinables dans les virages et qui comprennent au moins un dispositif de suspension hydropneumatique.

On entend ici par « véhicule automobile inclinable » un véhicule terrestre disposant d'au moins une machine motrice lui permettant de se déplacer, pouvant s'incliner dans les virages et comprenant une structure d'accueil de passager(s), ouverte ou fermée, et soit un train comportant une roue droite et une roue gauche, et un autre train comportant une unique roue, soit deux trains comportant chacun une roue droite et une roue gauche, Par conséquent, il pourra s'agir d'une voiture à trois ou quatre roues, ou d'une motocyclette à trois roues constituant un tricycle (comme par exemple un scooter à trois roues ou un « trike »), ou d'une motocyclette à quatre roues constituant un quadricycle, ou encore de tout autre véhicule à quatre roues et train arrière étroit doté d'une possibilité de forte inclinaison en courbe.

Dans certains des véhicules définis ci-avant les roues droite et gauche d'au moins un train sont couplées à un dispositif de suspension hydropneumatique. Ce dernier peut comprendre des amortisseurs droit et gauche couplés respectivement aux roues droite et gauche et reliés entre eux par un circuit hydraulique qui est piloté par des moyens de contrôle. C'est notamment le cas du dispositif de suspension hydropneumatique qui est décrit dans le document brevet FR 3037279.

Ce type de dispositif de suspension hydropneumatique peut permettre de freiner ou limiter la prise de roulis du véhicule tout en autorisant, lorsqu'il penche sur l'un de ses côtés, un redressement par la dynamique du véhicule suite à l'action de son conducteur sur le guidon ou le volant. Lorsque le véhicule décélère et passe sous un seuil de vitesse prédéfini (par exemple d'environ 5 km/h), le placement des électrovannes dans leur état fermé (non passant) bloque (ou verrouille) le roulis et donc maintient le véhicule vertical. Cependant, lorsque le véhicule penche sur l'un de ses côtés et que sa vitesse est inférieure au seuil précité ou qu'il est à l'arrêt, son dispositif de suspension hydropneumatique ne permet pas de le redresser automatiquement. Cela résulte notamment du fait que les électrovannes du dispositif de suspension hydropneumatique sont conçues pour être normalement dans leur état ouvert (ou passant) en l'absence d'alimentation électrique (pour éviter un blocage (ou verrouillage) de roulis en cas de perte d'alimentation électrique pendant une phase de roulage), et donc en cas d'arrêt du véhicule et de coupure de son moteur les électrovannes reviennent automatiquement dans leur état ouvert qui empêche le blocage du roulis.

D'une manière générale, les dispositifs de suspension hydropneumatique connus ne permettent qu'une conservation automatisée de la position verticale, mais en aucun cas une correction du roulis ou un redressement du véhicule.

Il a certes été proposé de maîtriser, sans automatisme, la prise de roulis au moyen de dispositifs de suspension offrant d'importants débattements et surtout un mécanisme anti-dévers important, lorsque le véhicule comprend une voie dite étroite (c'est-à-dire un train ayant une petite largeur). Cependant, de tels dispositifs de suspension rendent ces véhicules très inconfortables.

Par ailleurs, les dispositifs de suspension hydropneumatique, connus et utilisés dans des véhicules urbains à voie(s) étroite(s), ne permettent pas de rehausser (ou corriger le pompage ou l'assiette) de la structure d'accueil de passager(s) du véhicule par rapport à son train avant et/ou son train arrière afin d'assurer une assiette sensiblement constante quelle que soit la charge. Ils se contentent en effet de bloquer (ou verrouiller) la position en cours par une action mécanique ou hydraulique, le plus souvent de façon temporaire.

L'invention a donc notamment pour but d'améliorer la situation.

Elle propose notamment à cet effet un dispositif de correction hydraulique destiné à équiper un véhicule automobile inclinable ayant une structure d'accueil de passager(s) et un premier train comportant des roues droite et gauche couplées à des amortisseurs droit et gauche d'un premier dispositif de suspension hydropneumatique, dans lequel circule un fluide et assurant une fonction de contrôle de roulis.

Ce dispositif de correction hydraulique se caractérise par le fait qu'il comprend :
- un pont de Wheatstone hydraulique ayant des parties droite et gauche dédiées aux contrôles d'échange de fluide avec respectivement les amortisseurs droit et gauche, et une partie centrale comprenant une pompe associée à un réservoir de fluide et couplant entre elles les parties droite et gauche, et
- des moyens de contrôle imposant une première configuration au pont de Wheatstone hydraulique adaptée à un redressement de la structure par rapport à la roue droite ou gauche du premier train selon que la structure penche à droite ou à gauche, et un blocage du roulis du premier train avec les amortisseurs droit et gauche non opérationnels ou opérationnels selon qu'une vitesse en cours du véhicule est inférieure ou supérieure à un seuil de vitesse.

On peut ainsi redresser la structure par rapport à un train de façon automatisée lorsque le véhicule circule à faible vitesse ou est à l'arrêt.

Le dispositif de correction hydraulique selon l'invention peut comporter d'autres caractéristiques qui peuvent être prises séparément ou en combinaison, et notamment :
- lorsque la structure penche à droite ou à gauche, ses moyens de contrôle peuvent imposer soit un blocage du roulis du premier train avec les amortisseurs droit et gauche non opérationnels en association avec un premier débit de la pompe lorsque la vitesse en cours est inférieure au seuil de vitesse, soit un blocage du roulis du premier train avec les amortisseurs droit et gauche opérationnels en association avec un deuxième débit de la pompe, supérieur au premier débit, lorsque la vitesse en cours est supérieure au seuil de vitesse ;
- ses moyens de contrôle peuvent imposer une deuxième configuration au pont de Wheatstone hydraulique adaptée à un rehaussement de la structure par rapport au premier train et une libération du roulis du premier train, lorsqu'une hauteur de la structure par rapport au premier train est inférieure à un seuil de hauteur ;
   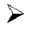 ses moyens de contrôle peuvent imposer un troisième débit à la pompe, supérieur au premier débit ;
   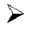 lorsque le véhicule comprend un second train comportant au moins une roue couplée à un second dispositif de suspension, il peut également comprendre une première électrovanne de couplage assurant un premier couplage contrôlé entre une sortie de la partie centrale du pont de Wheatstone hydraulique et une entrée du second dispositif de suspension, et une seconde électrovanne de couplage assurant un second couplage contrôlé entre une entrée de la partie centrale du pont de Wheatstone hydraulique et une sortie du second dispositif de suspension. Dans ce cas, les moyens de contrôle peuvent imposer, une fois la structure rehaussée par rapport au premier train, une troisième configuration au pont de Wheatstone hydraulique et une ouverture des première et seconde électrovannes de couplage adaptées à un rehaussement de la structure par rapport au second train et un blocage du roulis du premier train, lorsqu'une hauteur de la structure par rapport au second train est inférieure à un autre seuil de hauteur ;
      - en présence d'un second dispositif de suspension hydropneumatique, comprenant des amortisseurs droit et gauche couplés respectivement à des roues droite et gauche du second train, dans lequel circule le fluide et assurant une fonction de contrôle de roulis, ses moyens de contrôle peuvent imposer une libération du roulis du second train avec les amortisseurs droit et gauche non opérationnels lorsque la hauteur de la structure par rapport au second train est inférieure à l'autre seuil de hauteur ;
         ∘ en présence d'un second dispositif de suspension comprenant un circuit hydraulique comportant des accumulateurs droit et gauche et des première et deuxième électrovannes associées respectivement à des premier et second moyens anti-retour autorisant des circulations de fluide selon des sens opposés, ses moyens de contrôle peuvent imposer un placement soit de ces première et deuxième électrovannes dans un état ouvert en cas de besoin d'une libération du roulis au niveau du second train, soit de l'une au moins de ces première et deuxième électrovannes dans un état fermé en cas de besoin de blocage au moins partiel du roulis au niveau du second train ;
- la partie droite du pont de Wheatstone hydraulique peut comprendre une électrovanne d'admission droite couplée à une sortie de la partie centrale et à l'amortisseur droit du premier train, et une électrovanne d'échappement droite couplée à l'amortisseur droit du premier train et à une entrée de la partie centrale. De plus, la partie gauche du pont de Wheatstone hydraulique peut comprendre une électrovanne d'admission gauche couplée à la sortie de la partie centrale et à l'amortisseur gauche du premier train, et une électrovanne d'échappement gauche couplée à l'amortisseur gauche du premier train et à l'entrée de la partie centrale ;
- en présence d'un premier dispositif de suspension comprenant un circuit hydraulique comportant des accumulateurs droit et gauche et des première et deuxième électrovannes associées respectivement à des premier et second moyens anti-retour autorisant des circulations de fluide selon des sens opposés, ses moyens de contrôle peuvent imposer un placement soit des première et deuxième électrovannes dans un état ouvert en cas de besoin d'une libération du roulis au niveau du premier train, soit de l'une au moins des première et deuxième électrovannes dans un état fermé en cas de besoin de blocage au moins partiel du roulis au niveau du premier train.

L'invention propose également un véhicule automobile inclinable et comprenant une structure d'accueil de passager(s), un premier train comportant des roues droite et gauche couplées à des amortisseurs droit et gauche d'un premier dispositif de suspension hydropneumatique, dans lequel circule un fluide et assurant une fonction de contrôle de roulis, et un dispositif de correction hydraulique du type de celui présenté ci-avant.

Un tel véhicule peut, par exemple, également comprendre un second train comportant une roue couplée à un second dispositif de suspension, afin de constituer un tricycle (comme par exemple un scooter à trois roues ou un « trike »). Mais il pourrait également comprendre un second train comportant des roues droite et gauche couplées à des amortisseurs droit et gauche d'un second dispositif de suspension, éventuellement hydropneumatique, afin de constituer un quadricycle.

D'autres caractéristiques et avantages de l'invention apparaîtront à l'examen de la description détaillée ci-après, et des dessins annexés, sur lesquels :

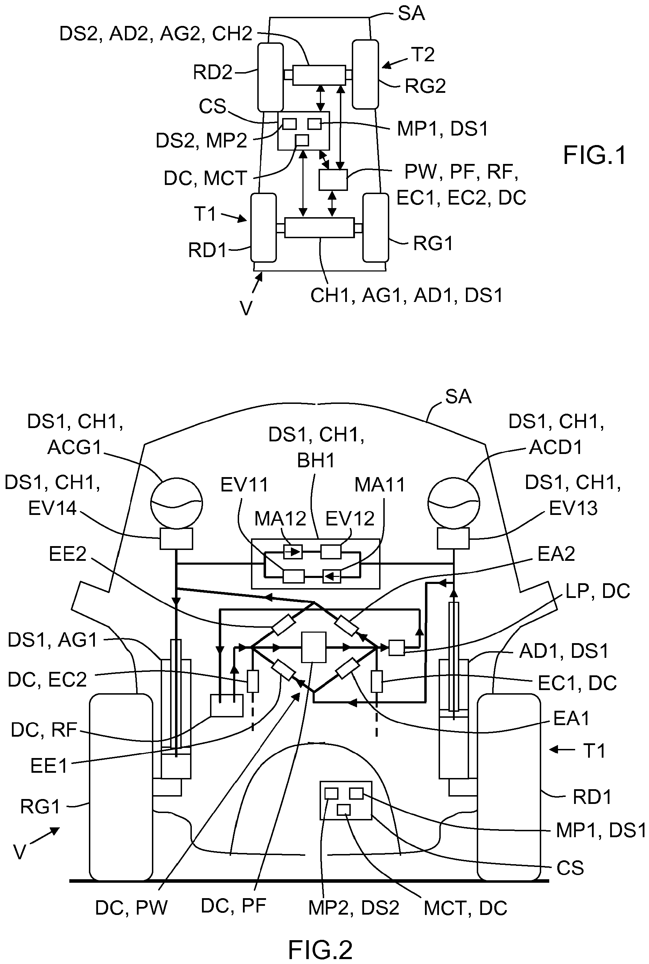

- la figure 1 illustre schématiquement et fonctionnellement, dans une vue du dessus, un exemple de véhicule automobile à quatre roues équipé d'un exemple de réalisation d'un dispositif de correction hydraulique selon l'invention et de deux dispositifs de suspension hydropneumatique,
- la figure 2 illustre schématiquement et fonctionnellement, dans une vue en coupe verticale et transversale, une partie avant du véhicule de la figure 1 avec le dispositif de correction hydraulique placé dans une première configuration et le premier dispositif de suspension placé dans un premier état, pour une correction de roulis à très faible vitesse,

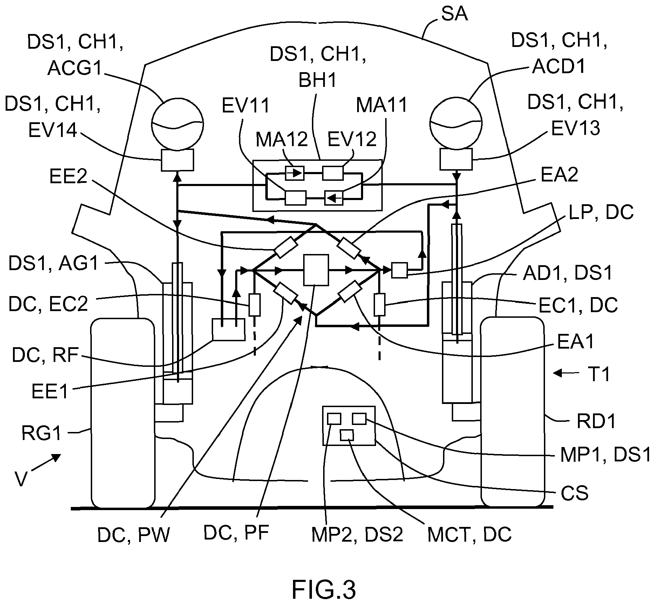

- la figure 3 illustre schématiquement et fonctionnellement, dans une vue en coupe verticale et transversale, une partie avant du véhicule de la figure 1 avec le dispositif de correction hydraulique placé dans une première configuration et le premier dispositif de suspension placé dans un deuxième état, pour une correction de roulis à faible vitesse,

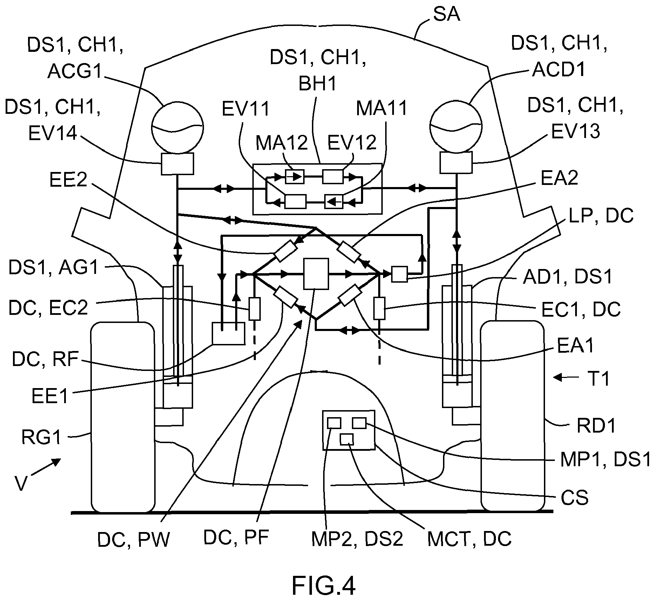

- la figure 4 illustre schématiquement et fonctionnellement, dans une vue en coupe verticale et transversale, une partie avant du véhicule de la figure 1 avec le dispositif de correction hydraulique placé dans une deuxième configuration et le premier dispositif de suspension placé dans un troisième état, pour une correction de pompage sur l'avant,

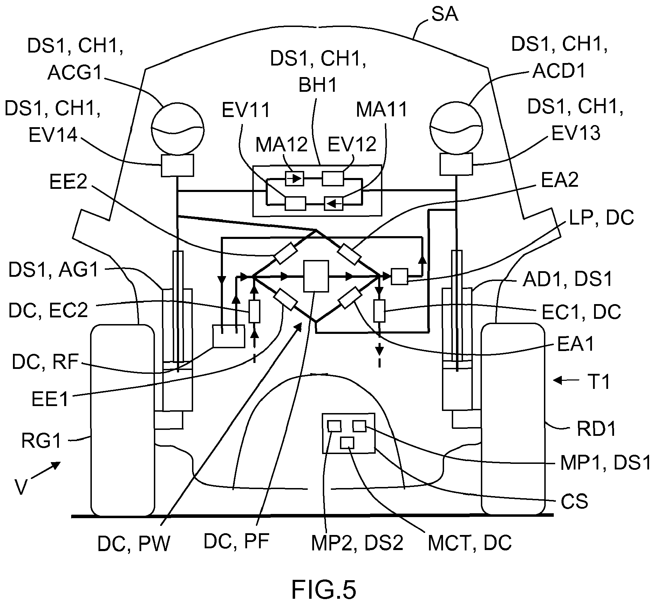

- la figure 5 illustre schématiquement et fonctionnellement, dans une vue en coupe verticale et transversale, une partie avant du véhicule de la figure 1 avec le dispositif de correction hydraulique placé dans une troisième configuration et le premier dispositif de suspension placé dans le premier état, pour une correction de pompage sur l'arrière, et

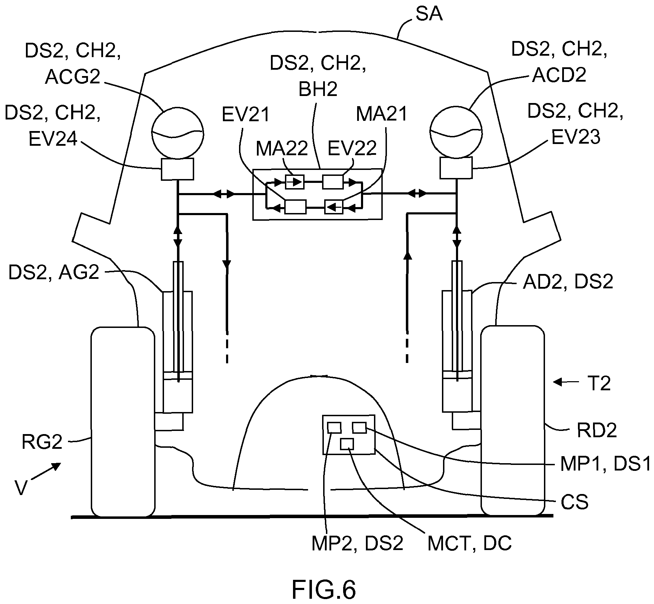

- la figure 6 illustre schématiquement et fonctionnellement, dans une vue en coupe verticale et transversale, une partie arrière du véhicule de la figure 1 avec le second dispositif de suspension placé dans un troisième état, pour une correction de pompage sur l'arrière.

L'invention a notamment pour but de proposer un dispositif de correction hydraulique DC destiné à équiper un véhicule automobile inclinable V ayant une structure SA d'accueil de passager(s) et un premier train T1 comportant des roues droite RD1 et gauche RG1 couplées à un premier dispositif de suspension hydropneumatique DS1.

Dans ce qui suit, on considère, à titre d'exemple non limitatif, que le véhicule automobile inclinable V à au moins une voie (ou un train) étroit(e) T2 et comprend une structure SA d'accueil de passager(s) fermée et donc ne permettant pas au conducteur d'agir pour maintenir une position verticale à l'arrêt (et notamment de poser le pied à terre). Mais l'invention n'est pas limitée à ce type de véhicule automobile inclinable. Elle concerne en effet tout type de véhicule terrestre disposant d'au moins une machine motrice lui permettant de se déplacer, pouvant s'incliner dans les virages et comprenant soit un train comportant une roue droite et une roue gauche, et un autre train comportant une unique roue, soit deux trains comportant chacun une roue droite et une roue gauche. Par conséquent, il pourra s'agir d'une voiture à trois ou quatre roues, ou d'une motocyclette à trois roues constituant un tricycle (comme par exemple un scooter à trois roues ou un « trike »), ou d'une motocyclette à quatre roues constituant un quadricycle, ou encore de tout autre véhicule à quatre roues et train arrière étroit doté d'une possibilité de forte inclinaison en courbe.

Par ailleurs, on considère dans ce qui suit, à titre d'exemple non limitatif, que le véhicule automobile inclinable V ne comprend qu'une machine motrice lui permettant de se déplacer. Cette machine motrice est par exemple un moteur thermique. Mais un véhicule automobile inclinable V peut comprendre au moins un moteur thermique et/ou au moins une machine électrique.

On a schématiquement représenté sur la figure 1 un exemple de véhicule automobile inclinable V équipé d'un exemple de réalisation d'un dispositif de correction hydraulique DC selon l'invention et de premier DS1 et second DS2 dispositifs de suspension hydropneumatique. Dans cet exemple non limitatif, le véhicule (automobile inclinable) V à quatre roues RD1, RG1, RD2 et RG2. Il comprend plus précisément un premier train T1 comportant une roue droite RD1 et une roue gauche RG1, et un second train T2 comportant une roue droite RD2 et une roue gauche RG2. Mais dans une variante de réalisation le véhicule V pourrait comprendre un premier train comportant une roue droite et une roue gauche et un second train comportant une unique roue.

On considère dans ce qui suit que les premier T1 et second T2 trains sont installés respectivement dans des partie avant et partie arrière du véhicule V. Par conséquent, le train (le plus) étroit est ici le second train (arrière) T2. Mais dans une variante de réalisation le train (le plus) étroit pourrait être le train avant.

Le premier dispositif de suspension hydropneumatique DS1 est couplé aux roues droite RD1 et gauche RG1 du premier train T1.

Le second dispositif de suspension (ici hydropneumatique) DS2 est couplé aux roues droite RD2 et gauche RG2 du second train T2. Il est important de noter que la mise en oeuvre de l'invention ne nécessite pas que le second dispositif de suspension DS2 soit hydropneumatique, mais cela est préférable pour le confort et pour maîtriser les variations de charges plus importantes à l'arrière.

Comme illustré au moins partiellement sur les figures 2 à 5, le premier dispositif de suspension hydropneumatique DS1 comprend par exemple un premier amortisseur droit AD1, un premier amortisseur gauche AG1, et un premier circuit hydraulique CH1 piloté par des premiers moyens de pilotage MP1.

Le premier amortisseur droit AD1 comprend une extrémité inférieure couplée à la roue droite RD1 du premier train T1. Le premier amortisseur gauche AG1 comprend une extrémité inférieure couplée à la roue gauche RG1 du premier train T1. Chaque extrémité inférieure est par exemple la partie terminale d'un cylindre dans lequel coulisse l'axe d'un piston, appelé tige de vérin. Ces premiers amortisseurs droit AD1 et gauche AG1 sont par ailleurs reliés entre eux par le premier circuit hydraulique CH1 dans lequel circule un fluide (comme par exemple de l'huile) de façon contrôlée. Ils sont par exemple agencés sous la forme de vérins comprenant chacun une chambre inférieure de volume variable communiquant avec le premier circuit hydraulique CH1 via la tige de vérin qui est alors creuse pour permettre la circulation du fluide. On notera qu'en variante on pourrait avoir des vérins comprenant chacun une chambre supérieure de volume variable communiquant avec le premier circuit hydraulique CH1.

Dans l'exemple illustré non limitativement sur les figures 2 à 5, le premier circuit hydraulique CH1 comprend notamment une première électrovanne EV11 associée à un premier moyen anti-retour MA11 autorisant la circulation du fluide selon un premier sens, une deuxième électrovanne EV12 associée à un second moyen anti-retour MA12 autorisant la circulation de ce même fluide selon un second sens opposé au premier sens, et des premiers accumulateurs droit ACD1 et gauche ACG1.

Ici, le premier sens va du premier amortisseur droit AD1 vers le premier amortisseur gauche AG1, et donc le second sens va du premier amortisseur gauche AG1 vers le premier amortisseur droit AD1.

La première électrovanne EV11 est couplée au premier moyen anti-retour MA11 via un sous-conduit et communique via un autre sous-conduit avec une partie droite d'un conduit principal qui communique également avec le premier accumulateur droit ACD1 et le premier amortisseur droit AD1. Le premier moyen anti-retour MA11 communique via un autre sous-conduit avec une partie gauche du conduit principal qui communique également avec le premier accumulateur gauche ACG1 et le premier amortisseur gauche AG1.

La deuxième électrovanne EV12 est couplée au second moyen anti-retour MA12 via un sous-conduit et communique via un autre sous-conduit avec la partie gauche du conduit principal. Le second moyen anti-retour MA12 communique via un autre sous-conduit avec la partie droite du conduit principal.

Les première EV11 et deuxième EV12 électrovannes peuvent, par exemple, être placées dans au moins trois états : un état (totalement) ouvert dans lequel elles laissent passer l'intégralité du fluide parvenant sur leur entrée sans perte de débit, un état (totalement) fermé dans lequel elles interdisent tout passage du fluide parvenant sur leur entrée, et un état partiellement ouvert dans lequel elles laissent passer une partie du fluide parvenant sur leur entrée avec une restriction de débit et une perte de charge. De préférence, elles sont de type dit « proportionnel », et donc peuvent prendre une pluralité d'états partiellement ouverts différents, compris entre l'état fermé et l'état ouvert, en fonction d'une tension de commande définie par les premiers moyens de pilotage MP1.

De préférence, l'état par défaut des première EV11 et deuxième EV12 électrovannes est l'état (totalement) ouvert.

Comme illustré non limitativement sur les figures 2 à 5, les première EV11 et deuxième EV12 électrovannes, les premier MA11 et second MA12 moyens anti-retour, et les différents sous-conduits peuvent être logés dans un premier boîtier hydraulique BH1 qui est couplé aux premiers moyens de pilotage MP1.

Par exemple, les premier MA11 et second MA12 moyens anti-retour peuvent être des clapets anti-retour.

Le premier circuit hydraulique CH1 peut, comme illustré non limitativement sur les figures 2 à 5, comprendre également des troisième EV13 et quatrième EV14 électrovannes.

La troisième électrovanne EV13 est intercalée entre le premier amortisseur droit AD1 et le premier accumulateur droit ACD1 afin de contrôler l'accès à ce dernier (ACD1) en fonction d'instructions définies par les premiers moyens de pilotage MP1. La quatrième électrovanne EV14 est intercalée entre le premier amortisseur gauche AG1 et le premier accumulateur gauche ACG1 afin de contrôler l'accès à ce dernier (ACG1) en fonction d'instructions définies par les premiers moyens de pilotage MP1.

On notera que ces troisième EV13 et quatrième EV14 électrovannes peuvent être placées dans au moins deux états : un état (totalement) ouvert dans lequel elles laissent passer l'intégralité du fluide parvenant sur leur entrée/sortie sans perte de débit, et un état (totalement) fermé dans lequel elles interdisent tout passage du fluide parvenant sur leur entrée/sortie.

La fonction d'amortissement de la suspension hydropneumatique peut, par exemple, être réalisée par un trou de fuite et un empilement de diaphragmes en parallèle. Cette fonction d'amortissement peut être placée entre l'entrée d'un accumulateur droit ACD1 ou gauche ACG1 et la troisième EV13 ou quatrième EV14 électrovanne associée.

De préférence, l'état par défaut des troisième EV13 et quatrième EV14 électrovannes est l'état (totalement) ouvert.

Dans l'exemple de réalisation illustré non limitativement sur les figures 1 à 6, les premiers moyens de pilotage MP1 sont installés dans un calculateur CS du véhicule V, par exemple chargé de la supervision de plusieurs organes. Mais cela n'est pas obligatoire. En effet, ils pourraient faire partie d'un calculateur appartenant au premier dispositif de suspension hydropneumatique DS1. Par ailleurs, ces premiers moyens de pilotage MP1 peuvent être réalisés sous la forme de modules logiciels (ou informatiques (ou encore « software »)), ou bien d'une combinaison de circuits électroniques (ou « hardware ») et de modules logiciels.

Les premiers moyens de pilotage MP1 sont agencés pour placer les électrovannes EV11, EV12, EV13 et EV14 dans des états choisis par les moyens de contrôle MCT du dispositif de correction hydraulique DC, et pour déterminer les états dans lesquels doivent être placées les électrovannes EV11, EV12, EV13 et EV14 en l'absence d'instruction issue du dispositif de correction hydraulique DC. Cette dernière détermination se fait alors en fonction, au moins, de l'inclinaison du véhicule V par rapport à la direction verticale.

L'ensemble comportant les quatre électrovannes EV11, EV12, EV13 et EV14 peut être placé dans plusieurs états (trois sont décrits ci-après).

Un premier état est illustré sur la figure 2. Il correspond à un placement de l'une au moins des première EV11 et deuxième EV12 électrovannes dans l'état fermé et des troisième EV13 et quatrième EV14 électrovannes dans l'état fermé pour bloquer au moins partiellement le roulis avec la première suspension non opérationnelle du fait que l'huile ne peut pas circuler du premier amortisseur droit AD1 vers le premier accumulateur droit ACD1 et/ou du premier amortisseur gauche AG1 vers le premier accumulateur gauche ACG1.

Un deuxième état est illustré sur la figure 3. Il correspond à un placement de l'une au moins des première EV11 et deuxième EV12 électrovannes dans l'état fermé et des troisième EV13 et quatrième EV14 électrovannes dans l'état ouvert pour laisser la première suspension opérationnelle (l'huile pouvant en effet circuler du premier amortisseur droit AD1 vers le premier accumulateur droit ACD1 et/ou du premier amortisseur gauche AG1 vers le premier accumulateur gauche ACG1).

Un troisième état est illustré sur la figure 4. Il correspond à un placement des première EV11 et deuxième EV12 électrovannes dans leur état ouvert et des troisième EV13 et quatrième EV14 électrovannes dans leur état ouvert pour injecter de l'huile simultanément dans les premiers amortisseurs droit AD1 et gauche AG1 pour rehausser la hauteur de la structure SA d'accueil de passager(s) par rapport au premier train T1. La correction de hauteur en pompage, ou assiette constante, est en effet réalisée durablement par une pression d'équilibre commune dans tout le premier circuit hydraulique CH1 afin de compenser le transfert d'huile dans au moins un accumulateur ACG1, ACD1 pour atteindre la pression d'équilibre imposée par la charge à porter.

Comme illustré sur la figure 6, le second dispositif de suspension DS2 peut être hydropneumatique et donc similaire au premier dispositif de suspension hydropneumatique DS1 décrit ci-avant. Dans ce cas, il comprend un second amortisseur droit AD2, un second amortisseur gauche AG2, et un second circuit hydraulique CH2 piloté par des seconds moyens de pilotage MP2.

Le second amortisseur droit AD2 comprend une extrémité inférieure couplée à la roue droite RD2 du second train T2. Le second amortisseur gauche AG2 comprend une extrémité inférieure couplée à la roue gauche RG2 du second train T2. Chaque extrémité inférieure est par exemple la partie terminale d'un cylindre dans lequel coulisse l'axe d'un piston, appelé tige de vérin. Ces seconds amortisseurs droit AD2 et gauche AG2 sont par ailleurs reliés entre eux par le second circuit hydraulique CH2 dans lequel circule un fluide (comme par exemple de l'huile) de façon contrôlée. Ils sont par exemple agencés sous la forme de vérins comprenant chacun une chambre inférieure de volume variable communiquant avec le second circuit hydraulique CH2 via la tige de vérin qui est alors creuse pour permettre la circulation du fluide. On notera qu'en variante on pourrait avoir des vérins comprenant chacun une chambre supérieure de volume variable communiquant avec le second circuit hydraulique CH2.

Dans l'exemple illustré non limitativement sur la figure 6, le second circuit hydraulique CH2 comprend notamment une première électrovanne EV21 associée à un premier moyen anti-retour MA21 autorisant la circulation du fluide selon un premier sens, une deuxième électrovanne EV22 associée à un second moyen anti-retour MA22 autorisant la circulation de ce même fluide selon un second sens opposé au premier sens, et des seconds accumulateurs droit ACD2 et gauche ACG2.

Ici, le premier sens va du second amortisseur droit AD2 vers le second amortisseur gauche AG2, et donc le second sens va du second amortisseur gauche AG2 vers le second amortisseur droit AD2.

La première électrovanne EV21 est couplée au premier moyen anti-retour MA21 via un sous-conduit et communique via un autre sous-conduit avec une partie droite d'un conduit principal qui communique également avec le second accumulateur droit ACD2 et le second amortisseur droit AD2. Le premier moyen anti-retour MA21 communique via un autre sous-conduit avec une partie gauche du conduit principal qui communique également avec le second accumulateur gauche ACG2 et le second amortisseur gauche AG2.

La deuxième électrovanne EV22 est couplée au second moyen anti-retour MA22 via un sous-conduit et communique via un autre sous-conduit avec la partie gauche du conduit principal. Le second moyen anti-retour MA22 communique via un autre sous-conduit avec la partie droite du conduit principal.

Les première EV21 et deuxième EV22 électrovannes du second circuit hydraulique CH2 peuvent, par exemple, être placées dans au moins les trois même états que ceux des première EV11 et deuxième EV12 électrovannes du premier circuit hydraulique CH1 : un état (totalement) ouvert, un état (totalement) fermé, et un état partiellement ouvert. De préférence, elles sont de type proportionnel, et donc peuvent prendre une pluralité d'états partiellement ouverts différents en fonction d'une tension de commande définie par les seconds moyens de pilotage MP2.

De préférence, l'état par défaut des première EV21 et deuxième EV22 électrovannes est l'état (totalement) ouvert.

Comme illustré non limitativement sur la figure 6, les première EV21 et deuxième EV22 électrovannes, les premier MA21 et second MA22 moyens anti-retour, et les différents sous-conduits peuvent être logés dans un second boîtier hydraulique BH2 qui est couplé aux seconds moyens de pilotage MP2.

Par exemple, les premier MA21 et second MA22 moyens anti-retour peuvent être des clapets anti-retour.

Le second circuit hydraulique CH2 peut, comme illustré non limitativement sur la figure 6, comprendre également des troisième EV23 et quatrième EV24 électrovannes.

La troisième électrovanne EV23 est intercalée entre le second amortisseur droit AD2 et le second accumulateur droit ACD2 afin de contrôler l'accès à ce dernier (ACD2) en fonction d'instructions définies par les seconds moyens de pilotage MP2. La quatrième électrovanne EV24 est intercalée entre le second amortisseur gauche AG2 et le second accumulateur gauche ACG2 afin de contrôler l'accès à ce dernier (ACG2) en fonction d'instructions définies par les seconds moyens de pilotage MP2.

On notera que ces troisième EV23 et quatrième EV24 électrovannes peuvent être placées dans au moins deux états : un état (totalement) ouvert dans lequel elles laissent passer l'intégralité du fluide parvenant sur leur entrée/sortie sans perte de débit, et un état (totalement) fermé dans lequel elles interdisent tout passage du fluide parvenant sur leur entrée/sortie.

De préférence, l'état par défaut des troisième EV23 et quatrième EV24 électrovannes est l'état (totalement) ouvert.

Dans l'exemple de réalisation illustré non limitativement sur les figures 1 à 6, les seconds moyens de pilotage MP2 sont installés dans le calculateur CS. Mais cela n'est pas obligatoire. En effet, ils pourraient faire partie d'un calculateur appartenant au second dispositif de suspension hydropneumatique DS2. Par ailleurs, ces seconds moyens de pilotage MP2 peuvent être réalisés sous la forme de modules logiciels, ou bien d'une combinaison de circuits électroniques et de modules logiciels.

Les seconds moyens de pilotage MP2 sont agencés pour placer les électrovannes EV21, EV22, EV23 et EV24 dans des états choisis par les moyens de contrôle MCT du dispositif de correction hydraulique DC, et pour déterminer les états dans lesquels doivent être placées les électrovannes EV21, EV22, EV23 et EV24 en l'absence d'instruction issue du dispositif de correction hydraulique DC. Cette dernière détermination se fait alors en fonction, au moins, de l'inclinaison du véhicule V par rapport à la direction verticale.

L'ensemble comportant les quatre électrovannes EV21, EV22, EV23 et EV24 peut être placé dans plusieurs états (trois sont décrits ci-après).

Le premier état est identique au premier état illustré sur la figure 2. Il correspond à un placement de l'une au moins des première EV21 et deuxième EV22 électrovannes dans l'état fermé et des troisième EV23 et quatrième EV24 électrovannes dans l'état fermé pour bloquer le roulis avec la seconde suspension non opérationnelle du fait que l'huile ne peut pas circuler du second amortisseur droit AD2 vers le second accumulateur droit ACD2 et/ou du second amortisseur gauche AG2 vers le second accumulateur gauche ACG2.

Un deuxième état est identique au deuxième état illustré sur la figure 3. Il correspond à un placement de l'une au moins des première EV21 et deuxième EV22 électrovannes dans l'état fermé et des troisième EV23 et quatrième EV24 électrovannes dans leur état ouvert pour laisser la seconde suspension opérationnelle (l'huile pouvant en effet circuler du second amortisseur droit AD2 vers le second accumulateur droit ACD2 et/ou du second amortisseur gauche AG2 vers le second accumulateur gauche ACG2).

Un troisième état est illustré sur la figure 6. Il correspond à un placement des première EV21 et deuxième EV22 électrovannes dans leur état ouvert et des troisième EV23 et quatrième EV24 électrovannes dans leur état ouvert pour injecter de l'huile simultanément dans les seconds amortisseurs droit AD2 et gauche AG2 pour rehausser la hauteur de la structure SA d'accueil de passager(s) par rapport au second train T2.

Comme illustré sur les figures 2 à 5, un dispositif de correction hydraulique DC, selon l'invention, comprend au moins un pont de Wheatstone hydraulique PW et des moyens de contrôle MCT.

Le pont de Wheatstone hydraulique PW a une partie droite (EA1, EE1) et une partie gauche (EA2, EE2) qui sont dédiées aux contrôles d'échange de fluide (admission et échappement) avec respectivement les premiers amortisseurs droit AD1 et gauche AG1 du premier train T1, et une partie centrale qui comprend une pompe PF associée à un réservoir de fluide RF et qui couple entre elles les parties droite (EA1, EE1) et gauche (EA2, EE2).

Les moyens de contrôle MCT sont agencés de manière à imposer une première configuration au pont (de Wheatstone hydraulique) PW qui est adaptée à un redressement de la structure SA par rapport à la roue droite RD1 ou gauche RG1 du premier train T1 selon que cette structure SA penche à droite ou à gauche, et un blocage du roulis du premier train T1 avec les amortisseurs droit AD1 et gauche AG1 non opérationnels ou opérationnels selon que la vitesse en cours du véhicule V est inférieure ou supérieure à un seuil de vitesse.

Ce seuil de vitesse peut, par exemple, être compris entre environ 0 km/h et environ 20 km/h. A titre d'exemple illustratif, il peut être égal à 5 km/h.

En d'autres termes :
- si la structure SA penche à droite et que la vitesse en cours du véhicule V est inférieure au seuil de vitesse, les moyens de contrôle MCT imposent une première configuration du pont qui induit un redressement à droite et un blocage du roulis du premier train T1 avec les premiers amortisseurs droit AD1 et gauche AG1 non opérationnels en requérant auprès des premiers moyens de pilotage MP1 le placement de l'ensemble comportant les quatre électrovannes EV11, EV12, EV13 et EV14 dans son premier état (au moins l'électrovanne EV11 ou EV12 qui évite la perte de pression du coté à relever est fermée),
- si la structure SA penche à gauche (cas de la figure 2) et que la vitesse en cours du véhicule V est inférieure au seuil de vitesse, les moyens de contrôle MCT imposent une première configuration du pont qui induit un redressement à gauche et un blocage du roulis du premier train T1 avec les premiers amortisseurs droit AD1 et gauche AG1 non opérationnels en requérant auprès des premiers moyens de pilotage MP1 le placement de l'ensemble comportant les quatre électrovannes EV11, EV12, EV13 et EV14 dans son premier état (au moins l'électrovanne EV11 ou EV12 qui évite la perte de pression du coté à relever est fermée),
- si la structure SA penche à droite et que la vitesse en cours du véhicule V est supérieure au seuil de vitesse, les moyens de contrôle MCT imposent une première configuration du pont qui induit un redressement à droite et un blocage du roulis du premier train T1 avec les premiers amortisseurs droit AD1 et gauche AG1 opérationnels pour le confort des passagers en requérant auprès des premiers moyens de pilotage MP1 le placement de l'ensemble comportant les quatre électrovannes EV11, EV12, EV13 et EV14 dans son deuxième état (au moins l'électrovanne EV11 ou EV12 qui évite la perte de pression du coté à relever est fermée), et
- si la structure SA penche à gauche (cas de la figure 3) et que la vitesse en cours du véhicule V est supérieure au seuil de vitesse, les moyens de contrôle MCT imposent une première configuration du pont qui induit un redressement à gauche et un blocage du roulis du premier train T1 avec les premiers amortisseurs droit AD1 et gauche AG1 opérationnels pour le confort des passagers en requérant auprès des premiers moyens de pilotage MP1 le placement de l'ensemble comportant les quatre électrovannes EV11, EV12, EV13 et EV14 dans son deuxième état (au moins l'électrovanne EV11 ou EV12 qui évite la perte de pression du coté à relever est fermée).

On notera que le blocage du roulis peut être partiel lorsque seule l'une des première EV11 et deuxième EV12 électrovannes est placée dans son état fermé, ou total lorsque les première EV11 et deuxième EV12 électrovannes son placées dans l'état fermé.

On notera également que les premiers amortisseurs droit AD1 et gauche AG1 ont besoin d'être opérationnels lorsque le véhicule V se déplace à une vitesse supérieure au seuil de vitesse, car ce véhicule V est soumis aux aspérités de la route.

On notera également que sur les figures 2 et 3 la structure SA ne penche pas vers la gauche, mais dans la réalité elle penche vers la gauche.

De préférence, lorsque la structure SA penche à droite ou à gauche, les moyens de contrôle MCT imposent soit un blocage du roulis du premier train T1 avec les amortisseurs droit AD1 et gauche AG1 non opérationnels en association avec un premier débit de la pompe PF lorsque la vitesse en cours est inférieure au seuil de vitesse, soit une libération du roulis du premier train T1 avec les amortisseurs droit AD1 et gauche AG1 non opérationnels en association avec un deuxième débit de la pompe PF, supérieur au premier débit, lorsque la vitesse en cours est supérieure au seuil de vitesse. Le débit de la pompe PF fait partie de la configuration du pont PW.

Par exemple, le premier débit de la pompe PF peut être obtenu lorsqu'elle fonctionne au ralenti (typiquement pour un régime de 1000 tours/minutes).

Egalement par exemple, le deuxième débit de la pompe PF peut être obtenu lorsqu'elle fonctionne à un régime compris entre 2000 tours/minute et 3500 tours/minute.

Comme illustré non limitativement sur les figures 2 à 5, la partie droite (EA1, EE1) du pont PW peut comprendre une électrovanne d'admission droite EA1 couplée à une sortie de la partie centrale du pont PW et au premier amortisseur droit AD1 du premier train T1, et une électrovanne d'échappement droite EE1 couplée au premier amortisseur droit AD1 du premier train T1 et à une entrée de la partie centrale du pont PW (située en amont de la pompe PF et couplée au réservoir de fluide RF). De même, la partie gauche (EA2, EE2) du pont PW peut comprendre une électrovanne d'admission gauche EA2 couplée à la sortie de la partie centrale et au premier amortisseur gauche AG1 du premier train T1, et une électrovanne d'échappement gauche EE2 couplée au premier amortisseur gauche AG1 du premier train T1 et à l'entrée de la partie centrale du pont PW.

On comprendra que l'électrovanne d'admission droite EA1 permet de contrôler l'alimentation en huile du premier amortisseur droit AD1 du premier train T1, l'électrovanne d'échappement droite EE1 permet de contrôler l'évacuation d'huile hors du premier amortisseur droit AD1 du premier train T1, l'électrovanne d'admission gauche EA2 permet de contrôler l'alimentation en huile du premier amortisseur gauche AG1 du premier train T1, et l'électrovanne d'échappement gauche EE2 permet de contrôler l'évacuation d'huile hors du premier amortisseur gauche AG1 du premier train T1.

La pompe PF sert à aspirer de l'huile contenue dans le réservoir RF pour alimenter le premier amortisseur droit AD1 et/ou le premier amortisseur gauche AG1 du premier train T1, via l'électrovanne d'admission droite EA1 et/ou l'électrovanne d'admission gauche EA2, ou bien à évacuer de l'huile contenue dans le premier amortisseur droit AD1 ou gauche AG1 du premier train T1, via l'électrovanne d'échappement droite EE1 ou gauche EE2, pour alimenter le réservoir RF.

Les électrovannes d'admission droite EA1 et gauche EA2 et les électrovannes d'échappement droite EE1 et gauche EE2 sont de préférence de type proportionnel, et donc peuvent prendre chacune une pluralité d'états partiellement ouverts différents, compris entre l'état fermé et l'état ouvert, en fonction d'une tension de commande définie par les moyens de contrôle MCT. Par ailleurs, l'état par défaut des électrovannes d'admission droite EA1 et gauche EA2 et des électrovannes d'échappement droite EE1 et gauche EE2 est de préférence l'état (totalement) fermé.

Lorsque le pont PW est placé dans sa première configuration (illustrée sur les figures 2 et 3) et que la structure SA penche à gauche, l'électrovanne d'échappement droite EE1 et l'électrovanne d'admission gauche EA2 sont dans l'état ouvert alors que l'électrovanne d'admission droite EA1 et l'électrovanne d'échappement gauche EE2 sont dans l'état fermé, afin de retirer de l'huile du premier amortisseur droit AD1 pour l'injecter dans le premier amortisseur gauche AG1, et ainsi redresser la structure à gauche.

Lorsque le pont PW est placé dans sa première configuration (illustrée sur les figures 2 et 3) et que la structure SA penche à droite, l'électrovanne d'échappement gauche EE2 et l'électrovanne d'admission droite EA1 sont dans l'état ouvert alors que l'électrovanne d'admission gauche EA2 et l'électrovanne d'échappement droite EE1 sont dans l'état fermé, afin de retirer de l'huile du premier amortisseur gauche AG1 pour l'injecter dans le premier amortisseur droit AD1, et ainsi redresser la structure à droite.

On notera, comme illustré non limitativement sur les figures 2 à 5, qu'il est préférable que le dispositif de correction hydraulique DC comprenne également, entre la sortie de sa partie centrale (en aval de la pompe PF) et l'entrée du réservoir RF, un limiteur de pression LP pour le tarage de la pression en sortie de la pompe PF. L'admission d'huile dans un amortisseur dépend en effet de la différence de pression entre la pression d'équilibre et la pression de tarage du limiteur de pression LP. L'échappement dépendant de la pression d'équilibre, on peut négliger la pression atmosphérique.

On notera également que le dispositif de correction hydraulique DC peut aussi être agencé de manière à permettre un rehaussement de la structure SA au moins par rapport au premier train T1. Dans ce cas, les moyens de contrôle MCT imposent une deuxième configuration au pont PW qui est adaptée à un rehaussement de la structure SA par rapport au premier train T1 et une libération du roulis du premier train T1, lorsqu'une hauteur de la structure SA par rapport au premier train T1 est inférieure à un seuil de hauteur. Dans ces conditions c'est le second train T2 qui assure le maintien vertical du véhicule V. Un tel rehaussement (ou correction de pompage ou d'assiette) est illustré sur la figure 4.

La libération du roulis du premier train T1 est imposée par les moyens de contrôle MCT au moyen d'une commande transmise aux premiers moyens de pilotage MP1 et correspondant au placement de l'ensemble comportant les quatre électrovannes EV11, EV12, EV13 et EV14 dans son troisième état (voir figure 4).

Le seuil de hauteur peut, par exemple, être compris entre environ 5 cm et environ 10 cm. A titre d'exemple illustratif, il peut être égal à 5 cm.

En présence de la dernière option, les moyens de contrôle MCT peuvent imposer un troisième débit à la pompe PF, supérieur au premier débit. Par exemple, le troisième débit de la pompe PF peut être obtenu lorsqu'elle fonctionne à un régime compris entre 2000 tours/minute et 3500 tours/minute. Les quatre électrovannes EV11, EV12, EV13 et EV14 étant ouvertes, les accumulateurs ACD1 et ACG1 sont sollicités et on compense l'écrasement de la suspension avant le départ. Par conséquent, le débit peut être important pour ne pas retarder le départ.

En présence du pont PW décrit ci-avant et illustré sur les figures 2 à 5, la deuxième configuration du pont PW (illustrée sur la figure 4) consiste à placer l'une au moins des électrovannes d'admission droite EA1 et gauche EA2 dans l'état ouvert et les électrovannes d'échappement droite EE1 et gauche EE2 dans l'état fermé, afin d'aspirer de l'huile dans le réservoir RF pour l'injecter dans l'un au moins des premiers amortisseurs droit AD1 et gauche AG1, et ainsi rehausser la structure SA de façon symétrique par rapport au premier train T1. Dans le même temps, le roulis du premier train T1 est libéré (en imposant le placement de l'ensemble EV11 à EV14 dans son troisième état (EV11 ouverte, EV12 ouverte, EV13 ouverte et EV14 ouverte)), afin d'égaliser les pressions gauche et droite.

On notera également que le dispositif de correction hydraulique DC peut aussi être agencé de manière à permettre un rehaussement de la structure SA par rapport au second train T2 (comprenant au moins une roue). Cela nécessite que le dispositif de correction hydraulique DC comprenne également des première EC1 et seconde EC2 électrovannes de couplage EC1. La première électrovanne de couplage EC1 est chargée d'assurer un premier couplage contrôlé entre la sortie de la partie centrale du pont PW et une entrée du second dispositif de suspension DS2 (ici située sur le second circuit hydraulique CH2 entre le second accumulateur droit ACD2 et le second amortisseur droit AD2, à titre d'exemple (voir figure 6)). La seconde électrovanne de couplage EC2 est chargée d'assurer un second couplage contrôlé entre une entrée de la partie centrale du pont PW (située en amont de la pompe PF) et une sortie du second dispositif de suspension DS2 (ici située sur le second circuit hydraulique CH2 entre le second accumulateur gauche ACG2 et le second amortisseur gauche AG2, à titre d'exemple (voir figure 6)).

Dans ce cas, les moyens de contrôle MCT imposent, une fois la structure SA rehaussée par rapport au premier train T1, une troisième configuration au pont PW et une ouverture des première EC1 et seconde EC2 électrovannes de couplage adaptées à un rehaussement de la structure SA par rapport au second train T2, et un blocage du roulis du premier train T1, lorsqu'une hauteur de la structure SA par rapport au second train T2 est inférieure à un autre seuil de hauteur.

Cet autre seuil de hauteur peut, par exemple, être compris entre environ 5 cm et environ 10 cm. A titre d'exemple illustratif, il peut être égal à 5 cm.

Le blocage du roulis du premier train T1 est imposé afin de ne pas perdre l'assiette de la structure SA préalablement obtenue par rapport au premier train T1.

En présence de la dernière option, les moyens de contrôle MCT peuvent imposer le premier débit à la pompe PF pour induire le rehaussement de la structure SA par rapport au second train T2.

On notera que les première EC1 et seconde EC2 électrovannes de couplage peuvent être placées dans au moins deux états : un état (totalement) ouvert et un état (totalement) fermé. Par ailleurs, l'état par défaut des première EC1 et seconde EC2 électrovannes de couplage est de préférence l'état (totalement) fermé.

En présence du pont PW décrit ci-avant et illustré sur les figures 2 à 5, la troisième configuration du pont PW (illustrée sur la figure 5) consiste à placer les électrovannes d'admission droite EA1 et gauche EA2 et les électrovannes d'échappement droite EE1 et gauche EE2 dans l'état fermé, afin d'alimenter en huile le second circuit hydraulique CH2, et ainsi rehausser la structure SA par rapport au second train T2. Dans le même temps, le roulis du premier train T1 est bloqué (en imposant le placement de l'ensemble EV11 à EV14 dans son premier état (EV11 fermée, EV12 fermée, EV13 fermée et EV14 fermée)), afin de maintenir l'assiette (ou pompage) par rapport au premier train T1.

Lorsque le second dispositif de suspension DS2 est hydropneumatique et comprend des seconds amortisseurs droit AD2 et gauche AG2 couplés respectivement aux roues droite RD2 et gauche RG2 du second train T2 (comme illustré non limitativement sur la figure 6), les moyens de contrôle MCT imposent une libération du roulis du second train T2 avec les seconds amortisseurs droit AD2 et gauche AG2 non opérationnels lorsque la hauteur de la structure SA par rapport au second train T2 est inférieure à l'autre seuil de hauteur. Dans ce cas, l'ensemble comprenant les première EV21, deuxième EV22, troisième EV23 et quatrième EV24 électrovannes est placé dans son troisième état (EV21 ouverte, EV22 ouverte, EV23 ouverte et EV24 ouverte).

Par ailleurs, en cas de besoin de blocage au moins partiel du roulis au niveau du second train T2, les moyens de contrôle MCT imposent un placement de l'une au moins des première EV21 et deuxième EV22 électrovannes dans l'état fermé.

Dans l'exemple de réalisation illustré non limitativement sur les figures 1 à 6, les moyens de contrôle MCT sont installés dans le calculateur CS. Mais cela n'est pas obligatoire. En effet, ils pourraient faire partie d'un calculateur appartenant au dispositif de correction hydraulique DC. Par ailleurs, ces moyens de contrôle MCT peuvent être réalisés sous la forme de modules logiciels, ou bien d'une combinaison de circuits électroniques et de modules logiciels.

## Revendications

1. Dispositif de correction hydraulique (DC) pour un véhicule automobile inclinable (V) ayant une structure (SA) d'accueil de passager(s), un premier train (T1) comportant des roues droite (RD1) et gauche (RG1) couplées à des amortisseurs droit (AD1) et gauche (AG1) d'un premier dispositif de suspension (DS1) hydropneumatique, dans lequel circule un fluide et assurant une fonction de contrôle de roulis, **caractérisé en ce qu'**il comprend i) un pont de Wheatstone hydraulique (PW) ayant des parties droite (EA1, EE1) et gauche (EA2, EE2) dédiées aux contrôles d'échange de fluide avec respectivement lesdits amortisseurs droit (AD1) et gauche (AG1), et une partie centrale comprenant une pompe (PF) associée à un réservoir de fluide (RF) et couplant entre elles lesdites parties droite (EA1, EE1) et gauche (EA2, EE2), et ii) des moyens de contrôle (MCT) imposant une première configuration audit pont de Wheatstone hydraulique (PW) adaptée à un redressement de ladite structure (SA) par rapport à ladite roue droite (RD1) ou gauche (RG1) dudit premier train (T1) selon que ladite structure (SA) penche à droite ou à gauche, et un blocage du roulis dudit premier train (T1) avec lesdits amortisseurs droit (AD1) et gauche (AG1) non opérationnels ou opérationnels selon qu'une vitesse en cours dudit véhicule (V) est inférieure ou supérieure à un seuil de vitesse.

2. Dispositif selon la revendication 1, **caractérisé en ce que**, lorsque ladite structure (SA) penche à droite ou à gauche, lesdits moyens de contrôle (MCT) imposent soit un blocage du roulis dudit premier train (T1) avec lesdits amortisseurs droit (AD1) et gauche (AG1) non opérationnels en association avec un premier débit de ladite pompe (PF) lorsque ladite vitesse en cours est inférieure audit seuil de vitesse, soit une libération du roulis dudit premier train (T1) avec lesdits amortisseurs droit (AD1) et gauche (AG1) opérationnels en association avec un deuxième débit de ladite pompe (PF), supérieur audit premier débit, lorsque ladite vitesse en cours est supérieure audit seuil de vitesse.

3. Dispositif selon la revendication 1 ou 2, **caractérisé en ce que** lesdits moyens de contrôle (MCT) imposent une deuxième configuration audit pont de Wheatstone hydraulique (PW) adaptée à un rehaussement de ladite structure (SA) par rapport audit premier train (T1) et une libération du roulis dudit premier train (T1), lorsqu'une hauteur de ladite structure (SA) par rapport audit premier train (T1) est inférieure à un seuil de hauteur.

4. Dispositif selon la revendication 3, **caractérisé en ce que** lesdits moyens de contrôle (MCT) imposent un troisième débit à ladite pompe (PF), supérieur audit premier débit.

5. Dispositif selon la revendication 3 ou 4, **caractérisé en ce que**, lorsque ledit véhicule (V) comprend un second train (T2) comportant au moins une roue (RD2, RG2) couplée à un second dispositif de suspension (DS2), il comprend en outre i) une première électrovanne de couplage (EC1) assurant un premier couplage contrôlé entre une sortie de ladite partie centrale du pont de Wheatstone hydraulique (PW) et une entrée dudit second dispositif de suspension (DS2), et ii) une seconde électrovanne de couplage (EC2) assurant un second couplage contrôlé entre une entrée de ladite partie centrale du pont de Wheatstone hydraulique (PW) et une sortie dudit second dispositif de suspension (DS2), et **en ce que** lesdits moyens de contrôle (MCT) imposent, une fois ladite structure (SA) rehaussée par rapport audit premier train (T1), une troisième configuration audit pont de Wheatstone hydraulique (PW) et une ouverture desdites première (EC1) et seconde (EC2) électrovannes de couplage adaptées à un rehaussement de ladite structure (SA) par rapport audit second train (T2), et un blocage du roulis dudit premier train (T1), lorsqu'une hauteur de ladite structure (SA) par rapport audit second train (T2) est inférieure à un autre seuil de hauteur.

6. Dispositif selon la revendication 5, **caractérisé en ce qu'**en présence d'un second dispositif de suspension (DS2) hydropneumatique, comprenant des amortisseurs droit (AD2) et gauche (AG2) couplés respectivement à des roues droite (RD2) et gauche (RG2) dudit second train (T2), dans lequel circule ledit fluide et assurant une fonction de contrôle de roulis, lesdits moyens de contrôle (MCT) imposent une libération du roulis dudit second train (T2) avec lesdits amortisseurs droit (AD1) et gauche (AG1) non opérationnels lorsque ladite hauteur de la structure (SA) par rapport audit second train (T2) est inférieure audit autre seuil de hauteur.

7. Dispositif selon la revendication 6, **caractérisé en ce qu'**en présence d'un second dispositif de suspension (DS2) comprenant un circuit hydraulique (CH2) comportant des accumulateurs droit (ACD2) et gauche (ACG2) et des première (EV21) et deuxième (EV22) électrovannes associées respectivement à des premier (MA21) et second (MA22) moyens anti-retour autorisant des circulations de fluide selon des sens opposés, lesdits moyens de contrôle (MCT) imposent un placement soit desdites première (EV21) et deuxième (EV22) électrovannes dans un état ouvert en cas de besoin d'une libération du roulis au niveau dudit second train (T2), soit de l'une au moins desdites première (EV21) et deuxième (EV22) électrovannes dans un état fermé en cas de besoin de blocage au moins partiel du roulis au niveau dudit second train (T2).

8. Dispositif selon l'une des revendications 1 à 7, **caractérisé en ce que** ladite partie droite (EA1, EE1) du pont de Wheatstone hydraulique (PW) comprend une électrovanne d'admission droite (EA1) couplée à une sortie de ladite partie centrale et audit amortisseur droit (AD1) dudit premier train (T1), et une électrovanne d'échappement droite (EE1) couplée audit amortisseur droit (AD1) du premier train (T1) et à une entrée de ladite partie centrale, et **en ce que** ladite partie gauche (EA2, EE2) du pont de Wheatstone hydraulique (PW) comprend une électrovanne d'admission gauche (EA2) couplée à ladite sortie de la partie centrale et audit amortisseur gauche (AG1) dudit premier train (T1), et une électrovanne d'échappement gauche (EE2) couplée audit amortisseur gauche (AG1) du premier train (T1) et à ladite entrée de la partie centrale.

9. Dispositif selon l'une des revendications 1 à 8, **caractérisé en ce qu'**en présence d'un premier dispositif de suspension (DS1) comprenant un circuit hydraulique (CH1) comportant des accumulateurs droit (ACD1) et gauche (ACG1) et des première (EV11) et deuxième (EV12) électrovannes associées respectivement à des premier (MA11) et second (MA12) moyens anti-retour autorisant des circulations de fluide selon des sens opposés, lesdits moyens de contrôle (MCT) imposent un placement soit desdites première (EV11) et deuxième (EV12) électrovannes dans un état ouvert en cas de besoin d'une libération du roulis au niveau dudit premier train (T1), soit de l'une au moins desdites première (EV11) et deuxième (EV12) électrovannes dans un état fermé en cas de besoin de blocage au moins partiel du roulis au niveau dudit premier train (T1).

10. Véhicule automobile inclinable (V) ayant une structure (SA) d'accueil de passager(s) et un premier train (T1) comportant des roues droite (RD1) et gauche (RG1) couplées à des amortisseurs droit (AD1) et gauche (AG1) d'un premier dispositif de suspension (DS1) hydropneumatique, dans lequel circule un fluide et assurant une fonction de contrôle de roulis, **caractérisé en ce qu'**il comprend en outre un dispositif de correction hydraulique (DC) selon l'une des revendications précédentes.
